Europäisches Patentamt

European Patent Office

Office européen des brevets

(11) Publication number: 0 349 186
A2

# (12) EUROPEAN PATENT APPLICATION

(21) Application number: 89306240.6

(22) Date of filing: 20.06.89

(51) Int. Cl.⁴: A23L 1/221 , A23G 3/30 , C11B 9/02

Claims for the following Contracting State: ES.

(30) Priority: 30.06.88 US 213740

(43) Date of publication of application:
03.01.90 Bulletin 90/01

(84) Designated Contracting States:
BE CH DE ES FR GB GR IT LI NL SE

(71) Applicant: WARNER-LAMBERT COMPANY
201 Tabor Road
Morris Plains New Jersey 07950(US)

(72) Inventor: Hussein, Momoun Mahmoud
115 Boulevard
Mountain Lakes New Jersey 07046(US)
Inventor: Barcelon, Shirley Ann
44 K53 Center Grove Road
Randolph New Jersey 07869(US)
Inventor: Soliman, Ahmed Abd-el-Hamid
60 Woodsedge Avenue
Budd Lake New Jersey 07828(US)
Inventor: Glass, Michael
10-15 Ellis Avenue
Fair Lawn New Jersey 07410(US)

(74) Representative: Jones, Michael Raymond et al
HASELTINE LAKE & CO. Hazlitt House 28
Southampton Buildings Chancery Lane
London WC2A 1AT(GB)

(54) Mint-type flavour oils, compositions containing them and processess for their preparation.

(57) Improved flavor oils, such as spearmint and peppermint oils, are prepared by extraction of common plant materials at a low temperature with high pressure using carbon dioxide as a solvent. The flavor oils prepared by the supercritical extraction process demonstrate enhanced organoleptic qualities, greater stability and shelf-life, and prolonged flavoring agent properties. In particular, these novel oils provide true mint leaf-type flavors and aromas which have more upfront sensory impact than conventional oils, enhanced aroma and flavor stability, reduced oxidative degradation properties and consequent cost savings and enhanced consumer acceptance. They may be used in a wide variety of compositions.

EP 0 349 186 A2

# MINT-TYPE FLAVOUR OILS, COMPOSITIONS CONTAINING THEM AND PROCESSESS FOR THEIR PREPARATION. '

## FIELD OF INVENTION

This invention relates to the preparation of novel flavor oils from plants or plant materials and compositions containing such novel flavor oils. More particularly, this invention relates to improved flavor oils prepared by extraction of these flavor oils, such as spearmint and peppermint oil, from fresh or dried plants or plant materials, by use of supercritical carbon dioxide and the improved flavor oil containing compositions prepared therefrom. Specifically, Applicants have prepared improved spearmint and peppermint flavoring oils by extraction of mint plant materials at a low temperature with high pressure using carbon dioxide as a solvent. Applicants have analyzed these oils and found them to possess markedly enhanced organoleptic qualities, greater stability and shelf-life, and prolonged flavoring agent properties.

## BACKGROUND OF THE INVENTION

Flavoring oils are well known and used in a wide variety of products. The mint-type flavoring oils are used in such products as food, chewing gum, confections, toothpaste, jellies, extracts, pharmaceuticals, beverages, tobacco and proprietary products.

Spearmint oil is ketone volatile oil derived from the leaves and flowering tops of Mentha spicata Linné (Menta virdis Linné) (common spearmint) or of Mentha cardiaca Gerard ex Baker (scotch spearmint). The "spearmint oil" constituents will vary depending upon the source of the plants, however, several constituents are usually present The main odoriferous constituent in American spearmint oil is the ketone 1-carvone. Other constituents include dihydrocarvone, 1-limonene, myrcene, 1-phellandrene, alpha- and beta-pinene and esters of valeric and caproic acids. German and/or Russian oil also include acetate of dihydrocuminic alcohol, cineole, and linalool. Spearmint oil is a colorless, or yellow, or greenish-yellow liquid having the characteristic odor and taste of spearmint.

Peppermint oil is an alcohol volatile oil derived from the leaves and flowering tops of Mentha piperita Linné. The constituents of "peppermint oil" produced will vary slightly depending upon the source of the plants. The chief constituent is 1-menthol. Other constituents include menthyl acetate, menthone, piperitone, alpha-pinene, 1-limonene, phellandrene, cadinene, menthyl isovalerate, isovaleric aldehyde, acetaldehyde, menthofuran, cineole, esters of acetic and, valeric acids, amyl alcohol, and dimethyl sulfide. Peppermint oil is a colorless or pale yellow liquid, having the characteristic strong, penetrating odor of peppermint, and a pungent taste, followed by a sensation of cold when air is immediately drawn into the mouth.

These volatile flavoring oils have traditionally been prepared by direct steam distillation (hydrodistillation). In essence, this process removes essential oils from plant material by use of high-temperature steam. Basically, the fresh plant material is taken directly to the distilling chamber where it is suspended on a grid such as a wire basket or other similar container. Steam is forced through the fresh herb carrying the oil droplets to a condensation chamber. Because of the tendency of certain components of volatile oils to hydrolyse or decompose at high temperatures, ideal methods of steam distillation provide for the diffusion rate of steam and water through the plant material to be as high as possible. The steam is generated elsewhere and piped into the container. The condensed distillate is composed of an easily separated oily layer and an aqueous layer. When using dried plant material, the same process is used except the dried plant material is first ground then covered with a layer of water before the steam is forced through the macerated mixture

A disadvantage associated with the use of steam distillation to prepare flavoring oils such as spearmint oil and peppermint oil is the tendency of certain heat labile components therein to hydrolyse or decompose at the high temperatures required by steam distillation. This results in changes in the odor and flavor properties of the flavoring oil so produced.

Supercritical gas extraction methodology makes use of the critical temperature, i.e , the temperature above which a gas cannot be liquified by an increase in pressure, of that particular gas. The use of supercritical $CO_2$ extraction techniques has proven successful in the development of better quality spice and floral flavoring agents. Super-critical extraction has been used in a wide variety of applications, for example, decaffination of coffee and tea, fractionation of fish oils, hops extraction, deodorization and hydrogenation of fats and oils, oleoresin and essential oil extraction from spices and herbs, food coloring extraction from plant material, citrus oil extraction from peels, oil extraction from snacks, oil seed extraction, cholesterol removal from dairy products, regeneration of frying oils, purification of biotechnology products and enzyme extraction from mushrooms. R. J Swientek, Food Processing, July 1987, pages 32, 34, 36.

U.S. Patent Nos. 4,123,559 and 4,198,432 to Vitzthum et al. disclose a process for the preparation of spice extracts, such as black pepper, clove, cinnamon, and vanilla, by use of a supercritical gas such as carbon dioxide. U.S. Patent No. 4,490,398 to Behr et al. discloses a two-stage procedure for production of spice extracts, such as black pepper, fennel, ginger and clove, wherein the first stage utilizes a liquified gas in subcritical state as to temperature and supercritical state as to pressure to extract the aroma components, and wherein the second stage utilizes a gaseous solvent which is in the supercritical state as to both temperature and pressure to extract the flavor components. U.S Patent No. 4,632,837 to Schutz et al. discloses a process for the production of concentrated extracts from fresh plants, such as dill, tarragon, cassia buds and mimosa flowers, by a single stage extraction using carbon dioxide at supercritical pressure.

It would be desirable to produce improved mint-type flavoring agents which have a cleaner, more natural flavor and odor. Those improved mint-type flavoring agents could be used in chewing gums, confections, toothpaste, jellies, extracts and pharmaceuticals. Thus, it would be desirable to produce mint-type flavoring agents without the use of high temperatures which hydrolyze or decompose several components of such volatile oils such as spearmint oil and peppermint oil.

## SUMMARY OF THE INVENTION

The present invention relates to a process for producing improved mint-type flavoring oils by use of supercritical carbon dioxide extraction, the novel oils themselves, and compositions containing the novel oils. The novel mint-type flavoring oils produced have a cleaner, more natural flavor and odor, demonstrate greater stability and shelf-life and provide longer-lasting flavoring agent properties to products prepared using these flavoring oils. In particular, these novel oils provide true mint leaf-type flavors and aromas which have more upfront sensory impact than conventional oils, enhanced aroma and flavor stability, reduced oxidation degradation properties and consequent cost savings and enhanced consumer acceptance. These oils may be used in a wide variety of compositions.

## BRIEF DESCRIPTION OF THE DRAWINGS

Figure 1 depicts the flow diagram for supercritical carbon dioxide extraction of mint leaves.

Figure 2 depicts the operating conditions for supercritical carbon dioxide extraction of spearmint oil as set forth in Example 1, run A.

Figure 3 depicts the operating conditions for supercritical carbon dioxide extraction of spearmint oil as set forth in Example 1, run B.

Figure 4 is the mass spectrum (MS) obtained of the $CO_2$ extracted spearmint oil of Example 1.

Figure 5 depicts gel permeation chromotograms (GPC) of spearmint oil Figure 5A depicts the GPC for conventional steam distilled spearmint oil. Figure 5B depicts the GPC for the residue after water distillation of the composite inventive $CO_2$ extracted spearmint oil. Figure 5C depicts the GPC of the volatile fraction of the inventive $CO_2$ extracted spearmint oil. Figure 5D depicts the GPC of the waxy fraction of the inventive $CO_2$ extracted spearmint oil.

## DETAILED DESCRIPTION OF THE INVENTION

The present invention relates to novel flavoring oils produced by use of extraction techniques using supercritical carbon dioxide as the solvent, the novel oils produced themselves, and compositions containing these novel oils. The critical temperature of carbon dioxide is 31.1 °C. The critical pressure of carbon dioxide is 1070 psia Extraction conditions are above these values, in the supercritical zone. Thus, according to the process of this invention, plant material consisting of the leaves, flowering tops of mixtures thereof, of spearmint or peppermint plants is charged into an extraction vessel. Supercritical carbon dioxide is pumped through the extraction vessel, and the mint extract is collected. The flow pattern for the supercritical carbon dioxide may be in either the down-flow for the up-flow mode, with down-flow processing being preferred. The system may be cycled under semi-batch or continuous flow conditions for sufficient time to extract the mint-type flavor oils. The supercritical carbon dioxide extracted mint-type flavoring oils provide a true version of the natural taste and odor of the mint plant material because there is little or no temperature-dependent degradation as a result of the lower temperature processing. The novel oils produced thereby may be incorporated into a wide variety of compositions and provide a true mint leaf-type flavor, longer lasting flavor, enhanced aroma, enhanced flavor and aroma stability, reduced oxidative degradation properties, greater upfront flavor and aroma, enhanced consumer acceptance and cost savings.

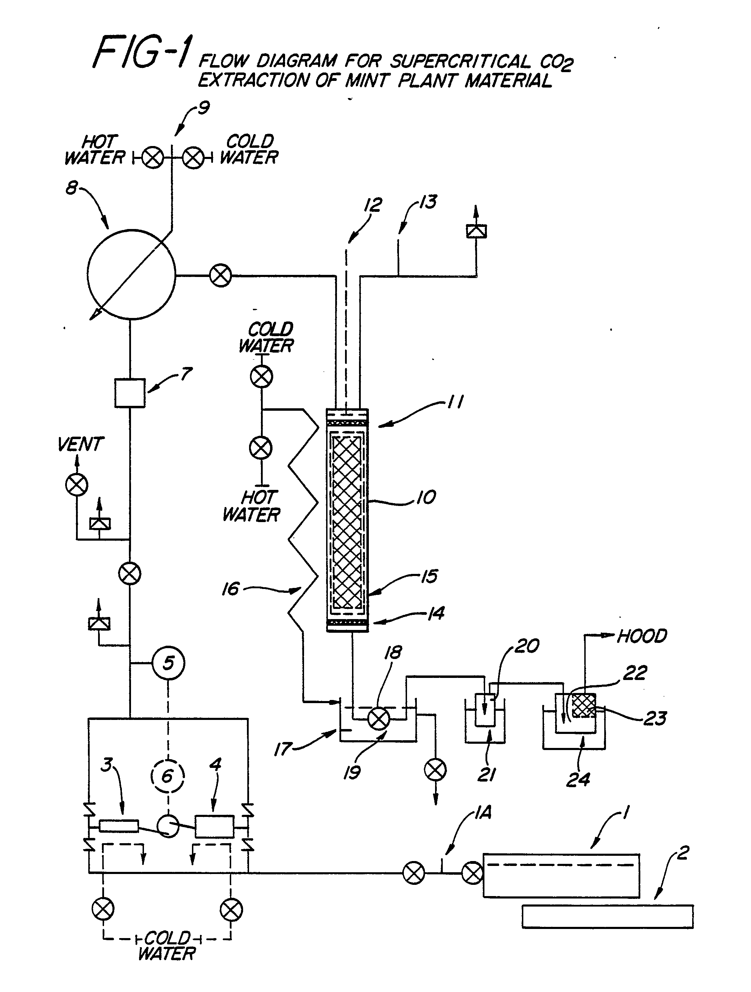

Referring now to Figure 1 which depicts the flow diagram for supercritical extraction of mint leaves, the carbon dioxide consumption and flow rate are determined by weighing the carbon dioxide feed cylinder 1 on scale 2. Liquid carbon dioxide from the partially-inverted tank flows to two piston pumps 3, 4 which are cooled by cold water to prevent vaporization within the cylinders and check valves. The system is protected from over pressurization by pressure safety switch 5 connected to drive motor 6 and rupture disks connected to a vent pipe. The liquid carbon dioxide stream is filtered by filter 7.

The carbon dioxide feed stream is vaporized and superheated in heat exchanger 8. The heat exchange fluid is blended from hot to cold utility water and temperature is monitored by thermometer 9. The supercritical carbon dioxide enters the top of the extraction vessel 10, where it is filtered by filter 11. Temperature at the entrance is measured by a thermocouple connected to a digital readout 12. The pressure at the top of the extraction vessel is indicated by gauge 13. Filter 14, identical to filter 11, is located at the bottom of the extraction vessel 10 to prevent leaf fines from plugging the exit tube at the bottom of extraction vessel 10. A stainless steel screen 15 is located on top of filter 14 and is attached to pull-out wires that extend the height of the vessel. The leaves are loaded in batches and tamped with a wooden stick to a pressure of about 25 to about 35 psi, to 1 inch from the top of the cylinder. Then filter 11 is inserted and the extraction vessel 10 is closed. The supercritical carbon dioxide is pumped through the system and extraction is commenced. The temperature and pressure of the supercritical carbon dioxide must be above about $31.1^\circ$ C and above about 1070 psia. Preferably, the temperature of the supercritical carbon dioxide is maintained from about $30^\circ$ C to about $40^\circ$ C and the pressure is cycled in the range of from about 1000 psia to about 3000 psia. The supercritical carbon dioxide may be pumped through the system in either the down-flow or up-flow mode. Down-flow is preferred and depicted in Figure 1. The system may be cycled under semi-batch or continuous flow conditions for at least one cycle to allow sufficient mint-type flavor oil to be extracted from the mint plant material. For discharge of the leaves, the extraction vessel 10 is opened, filter 11 is removed, the extraction vessel 10 is tilted about $45^\circ$, and the wires attached to screen 15 are used to pull the packed leaves from the vessel. The mass of leaves charged and discharged is noted.

The temperature of the extraction vessel 10 is controlled by coil 16, through which a blend of hot and cold utility water flows. The temperature of the water blend is measured by thermometer 17.

The pressure in the extraction vessel 10 is controlled manually by valve 18. Because carbon dioxide cools considerably upon expansion, this valve is warmed in a bath 19 by the effluent water from the coil 16 to prevent plugging by freezing.

The depressurized extract enters product trap 20, where the precipitated oil is collected in a glass test tube contained within a sealed steel cup. The trap 20 is maintained at a temperature cool enough to precipitate the mint-type flavor oil by ice water in container 21. Preferably this temperature should be maintained between about $-10^\circ$ C and about $20^\circ$ C.

The effluent gas proceeds to cold trap vessel 22, which is a thick-walled sealed glass cup. Demister 23 consisting of glass wool is used to recover entrained mist. The cold trap 22 is cooled by dry ice in isopropyl alcohol contained in container 24. The expanded carbon dioxide gas is exhausted to a hood.

The improved flavoring oil thus prepared may be stored or used directly as a flavoring agent by blending it with food, chewing gum, confectionary, pharmaceuticals, beverages, tobacco and proprietary products such as toothpaste and mouth wash by conventional means in amounts sufficient to provide the desired flavoring power. Acceptable amounts of flavoring may range from about 0.01% to about 5.0% by weight based on the weight of the final product. Preferred amounts of flavoring may range from about 0.1% to about 3.0% by weight and most preferred amounts may range from about 0.15% to about 1.8% by weight based on the weight of the final product. The final product containing the improved flavoring oil of the present invention has a true mint leaf-type flavor and aroma which lasts longer than products containing conventional mint flavoring oils. These improved flavor and aroma characteristics are more stable and generate enhanced consumer acceptance. Moreover, as the flavor and aroma characteristics are markedly improved over the conventional prior art flavoring oils, a cost savings is achieved in the preparation of final products in that less oil need be used to obtain better flavor and odor properties.

The novel spearmint oil prepared by $CO_2$ extraction was found to contain a mixture of compounds of higher molecular weight than the primary spearmint oil constituents. The range of these higher molecular weight components was from 200 to 800. It is believed that these higher molecular weight components are waxy constituents comprised of esters of higher fatty acids and higher aliphatic alcohols, alkanes of odd carbon numbers for example $C_{25}$, $C_{27}$ and $C_{29}$, primary alcohols of even number carbon atoms, for

example $C_{24}$, $C_{26}$ and $C_{28}$, and very long chain free fatty acids. These non-volatile components may play an important role in providing the $CO_2$ extracted oil with its long lasting flavor and odor characteristics.

Another aspect of the invention involves a method for preparing mint-type oil flavored chewing gum and confectionary compositions using the $CO_2$ extracted oils of the invention.

In accordance with the present invention, a mint-type $CO_2$ extracted oil as herein described is incorporated into a conventional chewing gum formulation or confectionary formulation. Both formulations may be sugar containing and/or sugar free materials wherein the mint-type $CO_2$ extracted flavor oil is incorporated in a base support media for the respective formulation. The term "base support media" as used herein refers to the basic components which make up the particular chewing gum or confectionary formulation. In the case of chewing gum, the base support material will comprise the chewing gum base, whereas in the case of a confectionary, the base support material will comprise the sweetening or syrup component.

With regard to chewing gum formulations in particular, the gum base used in this invention may be any water-insoluble gum base well known in the art. Illustrative examples of suitable polymers in gum bases include without limitation substances of vegetable origin such as chicle, jelutong, gutta percha and crown gum; synthetic elastomers such as butadiene-styrene copolymer, isobutylene-isoprene copolymer, polyethylene, polyisobutylene and polyvinylacetate, mixtures thereof, and the like.

The amount of gum base employed will vary greatly depending on various factors such as the type of base used, consistency desired and other components used to make the final product. In general, amounts from about 5% to about 99% by weight of the final gum composition are acceptable with preferred amounts being about 15% to about 45% by weight.

Plasticizers or softeners such as lanolin, stearic acid, sodium stearate, potassium stearate, glyceryl triacetate, glycerin and the like may also be incorporated into the gum base to obtain desirable texture and consistency properties. Such materials are generally employed in amounts of up to about 30% by weight and preferably from about 3% to about 7% by weight of the final gum base composition.

The chewing gum composition generally contains a sweetening agent. Sweetening agents may be selected from a wide range of materials such as water-soluble sweetening agents, water-soluble artificial sweeteners, and dipeptide based sweeteners, including mixtures thereof. Without being limited to particular sweeteners, representative illustrations encompass:

A. water-soluble sweetening agents such as monosaccharides, disaccharides and polysaccharides such as xylose, ribose, glucose, mannose, galactose, fructose, dextrose, sucrose, sugar, maltose, partially hydrolyzed starch, or corn syrup solids and sugar alcohols such as sorbitol, xylitol, mannitol and mixtures thereof:

B. artificial sweeteners such as soluble saccharin salts, i.e. sodium or calcium saccharin salts, cyclamate salts, acesulfame-K and the like, thaumatin, menellin, glycyrrhizic acid, chalcones class sweeteners, sucralose, and the free acid form of saccharin;

C. dipeptide based sweeteners such as L-aspartyl-L-phenylalanine methyl ester and materials described in U.S. Pat. No. 3,492,131, alitame, and the like.

In general, the amount of sweetener will vary with the type of sweetener selected for a particular chewing gum. This amount will normally be from about 0.01% to about 90% by weight when using an easily extractable sweetener. The water-soluble sweeteners described in category A are preferably used in amount of about 25% to about 75% by weight, and most preferably about 50% to about 65% by weight of the final chewing gum composition. In contrast, the artificial sweeteners described in categories B and C are used in amounts of about 0.005% to about 5.0% and most preferably about 0.05% to about 2.5% by weight of the final chewing gum composition. These amounts are necessary to achieve the desired level of sweetness independent from the flavor level achieved from the flavor oil.

The chewing gum of this invention may likewise contain additional conventional additives, including fillers such as calcium carbonate and talc; emulsifiers such as glyceryl monostearate and lecithin; coloring agents such as titanium dioxide and other conventional chewing gum additives known to one having ordinary skill in the chewing gum art.

The amount of mint-type $CO_2$ extracted oil employed is also a matter of preference subject to such factors as strength desired and gum base employed. In general, amounts between about 0 01% to about 5.0% by weight of the final chewing gum composition have been found quite acceptable, with amounts between about 0.1% and about 3.0% being preferred, and about 0.15% to about 1.8% being most preferred.

The $CO_2$ extracted oil may be incorporated into an otherwise conventional chewing gum formulation using standard techniques and equipment known to those skilled in the art. In a typical embodiment the chewing gum base is blended with a plasticizer together with other additives such as fillers and coloring agents under heat to plasticize the blend as well as to modulate the hardness, viscoelasticity and formability of the base. The heating temperature may vary widely but is for practical purposes preferably around 70°C to about 120°C. The chewing gum base is then blended with the flavoring composition which may have been previously blended with other ingredients. Once blending is achieved, the chewing gum formulation is removed and formed into any suitable shape.

The chewing gums of the invention may be in any form known in the art, such as stick gum, slab gum, chunk gum, shredded gum, hard coated gum, as well as center-filled gum.

The preparation of confectionary formulations is historically well known and has changed little through the years. In this regard, confectionary items have been classified as either the "hard" type or the "soft" type.

The preparation of soft confections, such as nougat, involves conventional methods, such as the combination of two primary components, namely (1) a high boiling syrup such as corn syrup or the like and (2) a relatively light textured frappe, generally prepared from gelatin, egg albumen, milk proteins such as casein and vegetable proteins such as soy protein, and the like. The frappe is generally relatively light, and may, for example, range in density from about 0.5 to about 0.7.

The high boiled syrup of the soft confectionary is relatively viscous and possess a higher density, and frequently contains a substantial amount of sugar. Conventionally, the final nougat composition is prepared by the addition of the high boiled syrup to the frappe under agitation, to form the basic nougat mixture. Further ingredients such as the mint-type $CO_2$ extracted oil, flavoring, additional sugar colorants, preservatives, medicaments, mixtures thereof and the like may be added thereafter also under agitation. A general discussion of the composition and preparation of nougat confections may be found in B. W. Minifie, CHOCOLATE, COCOA AND CONFECTIONERY: Science and Technology, 2nd Edition, AVI Publishing Co., Inc., Westport, Conn (1980), at pages 424-25.

The procedure for preparing the "soft" confectionary involves known procedures. In general, the frappe component is prepared first and thereafter the syrup component is slowly added under agitation at a temperature of at least 65°C and preferably at least 100°C. The components are continued to be mixed to form a uniform mixture, after which the mixture is cooled to a temperature below 80°C at which point the mint-type $CO_2$ extracted oil may be added. The mixture is further mixed for an additional period at which point it is ready for removal and formed into suitable confectionary shapes.

Similar to the soft confectionary, hard confectionary may be utilized in this invention which likewise may be processed and formulated by conventional means. In general, a hard confectionary has a base composed of a mixture of cane or beet sugar and glucose syrup, low moisture levels from about 0.5 to about 1.5% and is present in the final confectionary in amounts between about 5% to about 99% by weight of the final composition. Such confectionary may be routinely prepared by conventional methods, such as those involving fire cookers, vacuum cookers and scraped-surface cookers also referred to as high speed atmospheric cookers.

Fire cookers involve the traditional method of making candy base. In this method the desired quantity of sugar is dissolved in water by heating in a kettle until the sugar dissolves. Corn syrup or an invert sugar is then added and cooking continued until a final temperature of about 145°C to about 156°C is achieved. The batch is then cooled and worked as a plastic-like mass to incorporate additives.

A high-speed atmospheric cooker uses a heat-exchanger surface which involves spreading a film of candy on a heat exchange surface, the candy is heated to about 165°C to about 170°C in a few minutes. The candy is then rapidly cooled to about 100°C to about 120°C and worked as a plastic-like mass enabling incorporation of the additives, such as flavor, color, acidulents and medicaments.

In vacuum cookers, the sugar and corn syrup are boiled to about 125°C to about 132°C and vacuum applied and additional water is boiled off without extra heating. When cooking is complete, the mass is a semi-solid, having a plastic-like consistency. At this point color flavor and other additives are mixed into the mass by routine mechanical mixing operations.

The optimum mixing required to uniformly mix the flavor, color and other additives during conventional manufacturing of hard confectionary is determined by the time needed to obtain a uniform distribution of the materials. Normally, mixing times of about 4 to 10 minutes have been found acceptable.

Once the candy mass has been properly tempered it may be cut into workable portions or formed into desired shapes. A general discussion of the composition and preparation of hard confections may be found in H. A. Lieberman, Pharmaceutical Dosage Forms: Tablets, Vol. 1 (1980), Marcel Dekker, Inc. at pages 339 to 469.

It should be mentioned that the apparatus useful in accordance with the present invention comprises those cooking and mixing apparatuses well known in the confectionary manufacturing arts, and therefore the selection of specific apparatus will be apparent to the artisan.

In addition to use of the mint-type $CO_2$ extracted oils described, it is also possible to use other secondary flavoring agents within the formulation of this invention. Such additional flavors should be compatible with the mint-type $CO_2$ extracted oil and not alter the stability of the mint-type $CO_2$ extracted oil.

The secondary flavoring agents useful to prepare the flavoring compositions of this invention may be derived from plants, leaves, flowers, fruits, and so forth, and combinations thereof. Representative flavor oils include cinnamon oil and oil of wintergreen (methyl salicylate). Also useful are artificial, natural or synthetic fruit flavors such as citrus oils including lemon, orange, grape, lime, and grapefruit, and fruit essences including apple, strawberry, cherry, pineapple and so forth.

The amount of secondary flavoring agent employed is normally a matter of preference subject to such factors as flavor type, base type and strength desired. In general, amounts of about 0.05% to about 3.0% by weight of the final composition are useful with amounts of about 0.3% to about 1 5% being preferred and about 0.8% to about 1.2% being most preferred

The mint-type $CO_2$ extracted oil may be employed in the chewing gum or confectionary in either liquid form or dried form. When employed in the latter method, suitable drying means such as spray drying the oil or adsorption of the oil within an insoluble porous carrier such as polyethylene may be used. Alternatively, it may be absorbed onto a water soluble material, such as cellulose, starch, sugar and so forth. The actual techniques for preparing such dried forms are well known and do not constitute a part of this invention.

The confections useful in this invention include, but are not limited to, sugar and sugarless boiled candy, pressed tablets, toffee and nougat.

The following examples are illustrative of the invention, but are not deemed to be limiting thereof. All percentages used herein are based by weight of the final composition unless otherwise noted.

## EXAMPLE 1

This example demonstrates extracting spearmint oil from field-dried leaves

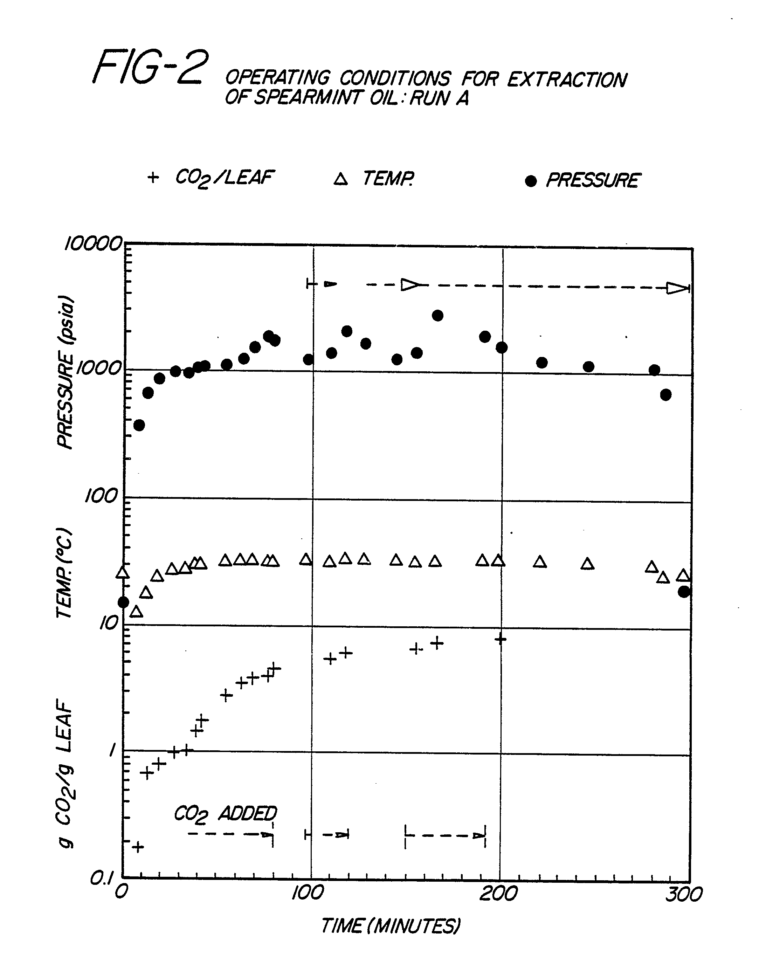

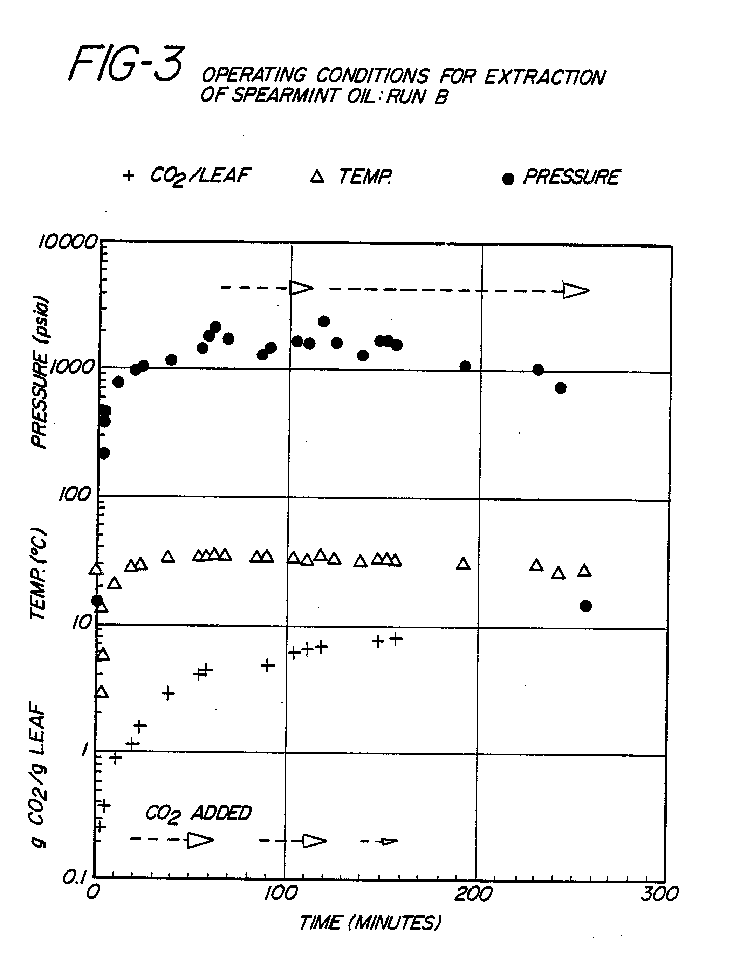

1950 grams of field-dried spearmint leaves and blossoms were received and processed in two runs. For these runs, the carbon dioxide obtained had a purity of 99.9%. Operating conditions for runs A and B are summarized in Figures 2 and 3, respectively. Runs A and B were carried out in the down-flow mode. Spearmint oil yields are 3 2 and 3.1 weight percent in runs A and B, respectively.

In run A, 739 grams of leaves were packed into the extraction vessel to a bulk density of 0.168 g/cm$^3$. In run B, 708 grams of leaves were packed to a bulk density of 0.161 g/cm$^3$.

Carbon dioxide was added at a controlled rate until the pressure in the extraction vessel equaled the vapor pressure (960 psia) in the feed tank. Then carbon dioxide was pumped into the extraction vessel until the pressure reached about 1975 psia. Product removal was then initiated. The pressure in the vessel was cycled down to about 1225 psia and back up to about 1975 psia. The pressure down-swing cycle was performed three times to ensure that stagnant interstices in the bed were purged of extract fluid. The mean pressure during product take-off in run A was 1625 psia; in run B, it was 1575 psia.

Total extraction time (filling, flow-through, and blow-down) was 4.9 hours in run A and 4.3 hours in run B. The total amount of carbon dioxide that flowed through the bed of leaves in run A was 8.16 g $CO_2$/g leaf. In run B, the solvent to feed ratio was 7.94 g $CO_2$/g leaf. The average temperature in run A was 33° C. In run B, it was 34° C.

Temperature tended to be warmer than that provided by thermometer 8 when pumping in $CO_2$ (above 975 psia) due to compression of the gas already in the bed. The bed cooled during initial filling (to 875 psia) and during blow-down of the $CO_2$ due to expansion-cooling. The lowest temperature reached was 26° C during blow-down. Liquid carbon dioxide was always formed in the bed of leaves during the expansion operations because heat cannot be transferred from the extraction vessel walls fast enough without exposing the leaves to undesirable higher wall temperatures.

The yield of oil in run A was 23.4 g from product trap 20, and 0.5 g from cold trap vessel 22, for a total of 23.9 g (in the yield calculations, the amount of material recovered in cold trap vessel 22, which was emptied only once, was allocated equally to runs A and B). This product recovery represents 3.2% of the mass of leaves charged. In addition, 2 g of water was recovered (0.27% of feed) from cold trap vessel 22 and demister 23. This total liquid recovery of 3.5% can be compared to the total loss of leaf mass 3.7%. The 0.2% not recovered is predominantly water as it is more difficult to condense than the essential oils.

The yield of oil in run B was 21.6 g from product trap 20 and 0.5 g from cold trap vessel 22. This represents 3.1% of the feed leaves. The amount of water recovered in cold trap vessel 22 and demister 23 was 2 g, or 0.28% of the feed. The total liquid recovery of 3.4% can be compared to the leaf mass loss of 4.1%. The 0.7% unrecovered is predominantly water.

The oils from runs A and B are orange in color and have a cloudy particulate component and a nice woody, leafy spearmint odor.

## EXAMPLE 2

This example demonstrates extracting peppermint oil from field-dried leaves.

1882 grams of field-dried peppermint leaves and blossoms were received and processed in three runs. For these runs, carbon dioxide was obtained with a purity of 99.9%. Peppermint oils yields are 1.8, 2.2 and 1.9 weight percent in runs C, D and E, respectively.

In run C, 799 grams of leaves were packed into the extraction vessel to a bulk density of 0.182 $g/cm^3$. In Run D, 866 grams of leaves were packed to a bulk density of 0.197 $g/cm^3$. In run E, 731 grams were packed to a bulk density of 0.166 $g/cm^3$.

Runs C and D were carried out with the carbon dioxide flowing through in the down-flow mode, as in runs A and B. Run E was carried out with the carbon dioxide flowing through the extraction vessel in the up-flow mode.

In each of runs C, D and E, carbon dioxide was added at a controlled rate until the pressure in the extraction vessel equalled the vapor pressure (820-960 psia) in the feed tank. The carbon dioxide was pumped into the extraction vessel until the pressure reached 2100-2400 psia. Product removal was then initiated. In runs C and D, the pressure in the vessel was cycled down to about 1200 psia and back up to 2100-2400 psia. The pressure down-swing cycle was performed three times to ensure that stagnant interstices in the bed were purged of extract fluid. The median pressure during product take-off in runs C and D was about 1500. In run E, the pressure was cycled three times from 2100-2400 psia down to atmospheric pressure. The median pressure during product take-off in run E was about 1200 psia.

Total extraction time (filling, flow-through, and blow-down) was 4.9 hours in run C, 5.9 hours in run D, and 10.0 hours in run E.

The total amount of carbon dioxide that flowed, through the bed of leaves in run C was 6.81 g $CO_2$/g leaf, or 7.92 g $CO_2$/g dry leaf material. In run D, the solvent to feed ratio was increased to 8.49 g $CO_2$/g leaf, or 9.83 g $CO_2$/g dry leaf material. Of the total 9.83 g $CO_2$/g dry leaf, 6.7 g flowed through the bed at above 1100 psia in run D. The mean solubility level in run C was 0.27 wt % oil in the carbon dioxide extract. In run D, the mean solubility level was 0.26 wt. %.

In run E, the oil could only be recovered by inherent solubility in $CO_2$ (plus any droplet entrainment contribution). With a solvent to feed ratio of 10.1 g $CO_2$/g leaf, or 11.7 g $CO_2$/g dry leaf material in the first two cycles, the mean solubility of essential oil was calculated to be at least 0.16 wt. %. In the last cycle of run E, up to rhe final solvent to feed ratio of 14.6 g $CO_2$/g leaf, or 16.9 g $CO_2$/g dried leaf material, a mean solubility level of 0.06 wt. % was calculated. Of the total 16.9 g $CO_2$/g dry leaf, 8.5 g flowed through the bed at pressures above 1100 psia. Solubility of oil in supercritical carbon dioxide decreases with decreasing pressure; the mean pressure in run E was 300 psia lower than in runs C and D.

The average temperature in runs C, D, and E was 34°C. The greatest temperature fluctuations (24-42°C) were measured for the up-flow example (run E). The location of the thermocouple at the exit of the up-flow bed provided more accurate monitoring of compressive heating and expansion/evaporative cooling.

The yield of oil in run C was 14.7 g from product trap 20, and 0.1 g from cold trap vessel 22, for a total of 14.8 g (in the yield calculations, the amount of material recovered in cold trap vessel 22, which was emptied only once, was allocated between runs C and D). This product recovery represents 1.8% of the mass of leaves charged. In addition, 2.2 g of water was recovered (0.25% of feed) from cold trap vessel 22 and demister 23. This total liquid recovery of 2.1% can be compared to the total loss of leaf mass of 2.0%.

The yield of oil in run D was 18.9 g from product trap 20, and 0.2 g from cold pressure vessel 22, for a total of 19.1 g. This represents 2.2% of the feed leaves. Some of the wax residue left on the walls of product trap 20 was dissolved in acetone and further analyzed. The amount of water recovered was 6.5 g, or 0.75% of the feed. The total liquid recovery of 3.0% can be compared to the leaf mass loss of 3.8%. The 0.8% unrecovered is predominantly water.

The yield of oil in run E was 13.6 g, or 1.9 wt. %. The amount of water recovered was 3.6 g, or 0.49 wt. % of the feed. The total liquid recovery of 2.4 wt. % can be compared to the leaf mass loss of 3.6%.

The oils from runs C, D and E are orange in color and cloudy with a waxy component. The oils have a nice peppermint odor.

## EXAMPLE 3

To establish a general characterization of the novel oils extracted by the method of this invention, comparative organoleptic evaluation and stability testing were performed by a panel of experts on oils prepared from plant materials (from the same source) produced according to the method of Examples 1 and 2 and by conventional steam distillation techniques.

### Physical Appearance:

$CO_2$ extracted spearmint oil is a dark orange color and not homogeneous in that it contains some solid and semi-solid materials. These solid and semi-solid materials melted into solution upon slight warming under running warm water, with the solution then becoming clear, orange-yellow and homogeneous.

Steam distilled spearmint oil is a clear, slightly yellowish-colored homogeneous product.

$CO_2$ extracted peppermint oil is a orange-colored nonhomogenous product. The oil contains a waxy-type semi-solid and solid component which melts into solution upon slight warming.

Steam distilled peppermint oil is a clear, very pale yellowish-colored homogeneous product.

### Odor Evaluation (on a plotter):

$CO_2$ extracted spearmint oil has an herbal, spearmint plant leaf odor and freshness which is diffusive and long-lasting. Odor on the plotter is distinctly perceptible for 3 days and a residual aroma may be perceived after a week.

Steam distilled spearmint oil has an initial sharp still note (slightly burnt note due to heat) and harsh odor which, upon dry out, is a characteristic spearmint with floral perfumy undertone. Residual aroma is not perceptible on the plotter after 24 hours.

### Taste Evaluation (in sugar fondant at 0.2%):

$CO_2$ extracted spearmint oil has a spearmint plant leaf characteristic taste with a more minty, leafy bite, more diffusive sensation and slightly less bitterness.

Steam distilled spearmint oil has a characteristic spearmint oil taste with slight bitterness.

### Odor Characteristics:

Comparative samples of $CO_2$ extracted and steam distilled spearmint oil were tested over a five (5) day time period for duration of odor. A perfume testing filter (PIF) was dipped into each sample and evaluated daily for five days. The $CO_2$ extracted spearmint oil still had a sweet, herbaceous, floral odor after 5 days. The steam distilled spearmint oil odor was not perceptible on the PTF after 2 days. Similar results were found with the peppermint oils.

### Stability of $CO_2$ Extracted Oil

Comparative samples of $CO_2$ extracted and steam distilled spearmint oils were evaluated after exposure to non-ideal storage conditions (sunlight with air headspace) for ten weeks. The $CO_2$ extracted spearmint and peppermint oils demonstrated better stability as indicated by a minimal alteration in their initial pleasant characteristic odors as contrasted with a greater change in the odor of the steam distilled oils. Upon gas chromatographic analysis, less changes were noted in the concentration of the mono-terpenes and other constituents prone to oxidation in the $CO_2$ extracted spearmint oil. Terpenes are primarily associated with the oxidative degradation of these oils and, hence, are indicative of the stability of these products. Tables I and II below set forth the comparative data for spearmint and peppermint oil.

TABLE I

| (SPEARMINT OIL) | | | | |
|---|---|---|---|---|
| | % Peak Areas | | | |
| | CO$_2$ Extracted | | Steam Distilled | |
| Constituent | Control | Exposed | Control | Exposed |
| myrcene | 0.68 | 0.23 | 0.89 | 0.11 |
| cis-ocimene | 0.02 | - | 0.02 | - |
| para-cymene | 0.01 | 0.03 | - | 0.06 |
| beta-caryophyllene | 0.52 | 0.32 | 0.59 | 0.08 |
| trans-beta-farnesene | 0.44 | 0.13 | 0.45 | 0.09 |
| germacrene-D | 0.36 | 0.20 | 0.41 | 0.18 |

TABLE II

| (PEPPERMINT OIL) | | | | |
|---|---|---|---|---|
| | % Peak Areas | | | |
| | CO$_2$ Extracted | | Steam Distilled | |
| Constituent | Control | Exposed | Control | Exposed |
| myrcene | 0.26 | 0.21 | 0.28 | 0.18 |
| alpha-terpinene | 0.08 | 0.06 | 0.16 | - |
| cis-ocimene | 0.56 | 0.42 | 0.53 | 0.24 |
| gamma-terpinene | 0.33 | 0.31 | 0.43 | 0.15 |
| para-cymene | 0.07 | 0.13 | 0.12 | 0.49 |
| beta-bourbonene | 0.45 | 0.59 | 0.50 | 0.87 |
| germacrene-D | 3.41 | 1.87 | 3.07 | 0.65 |

The tables show less oxidative degradation of the myrcene, alpha-terpiene, cis-ocimene, gamma-terpinene, beta-bourbonene, beta-caryophyllene, trans-beta-farnesene and germacrene-D in the CO$_2$ extracted oils than in the steam distilled oils. The increase associated with the para-cymene constituent is also indicative of degradation and this increase is of lesser magnitude in the CO$_2$ extracted oil samples. As such, in as much as the oils produced by CO$_2$ extraction are more stable, the products prepared therefrom will also show enhanced flavor and/or odor stability as compared to conventional steam distilled oil flavored products.

EXAMPLE 4

Separation of the CO$_2$ Extracted Spearmint Oil

The novel spearmint oil of the present invention was water distilled to separate the non-volatile components from the volatile components. Volatile components constituted approximately 85% of the total CO$_2$ extracted oil; the remaining 15% constituted non-volatile components. The non-volatile components (those remaining in the distillation flask after distillation) were then further separated by solubilities into an alcohol soluble residual solid fraction and an alcohol non-soluble solid white waxy fraction. These various separate components were further analyzed by GPC as set forth below.

EXAMPLE 5

10

The constituents of the novel spearmint oil prepared by $CO_2$ extraction as set forth in Example 1 were compared with standard steam distilled spearmint oil. The $CO_2$ extracted oil was found to contain a waxy particulate component which melted into the oil upon slight warming. This white, waxy solid was precipitable from the oil by alcohol. Various analytical procedures comparing the $CO_2$ extracted oil and the steam-distilled oil were performed as set forth below.

Mass Spectral Analysis (MS)

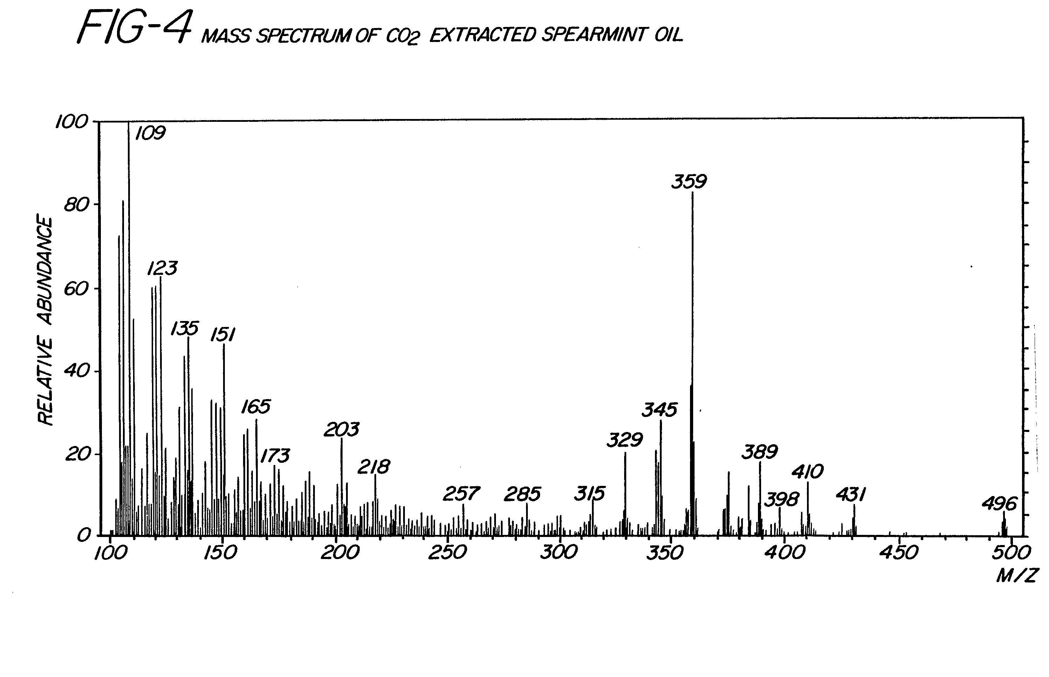

Mass spectral analysis provides information as to the chemical composition of the sample analyzed. Mass spectral analysis of the oil samples was performed by use of a fast atom bombardment (FAB) ion source using Xenon gas for producing ions (FAB sputtering). Approximately 1 ul of sample was dispersed onto the FAB target of a double focusing mass spectrometer with a data processing system with an ion source and control unit. The "emission" was 5 mA and the "gun high voltage" was 3 kV. Spectra were obtained from 100 to 1500 m/z and are shown in Figure 4.

The mass spectral analysis of the sample showed that the non-volatile fraction contained a complex mixture of compounds having a molecular weight range of 200 to 800.

Gel Permeation Chromatography (GPC)

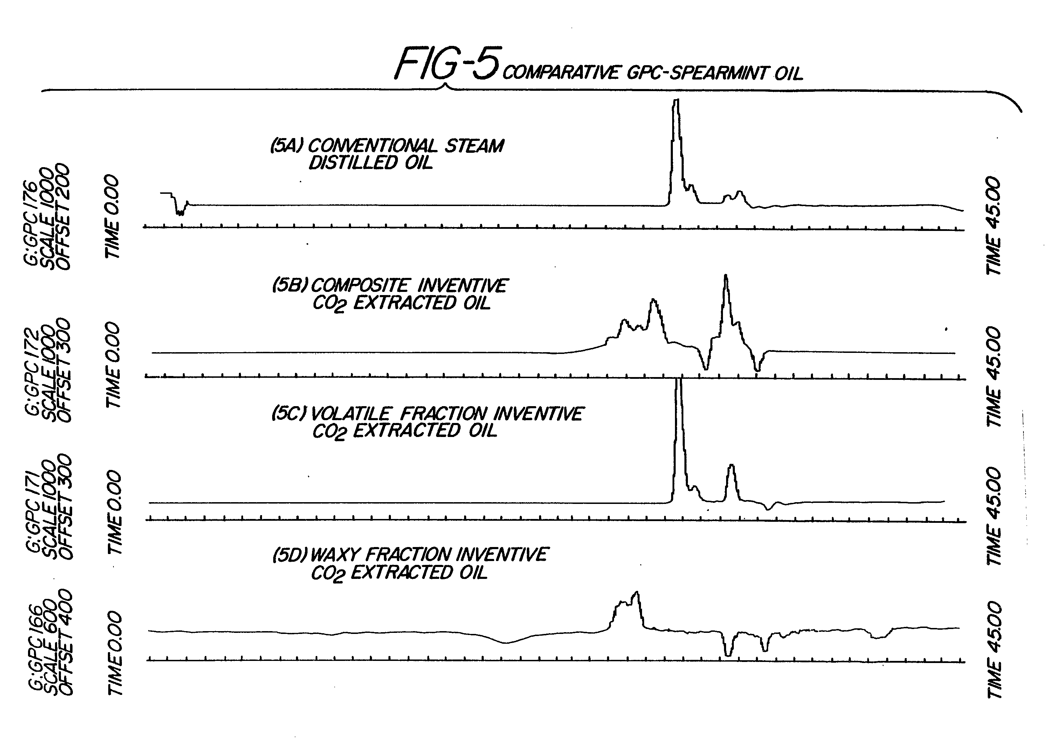

GPC was performed on a sample of $CO_2$ extracted spearmint oil and a sample of conventional steam distilled spearmint oil. The results are graphically depicted in Figure 5 wherein comparative sample GPC results are presented. The molecular weight peaks run from higher to lower and the run conditions were identical. Figure 5A shows conventional steam distilled spearmint oil. Figure 5B shows the residue after water distillation of the inventive $CO_2$ extracted spearmint oil. Figure 5C shows the volatile fraction from the inventive $CO_2$ extracted spearmint oil. Figure 5D shows the waxy fraction from the inventive $CO_2$ extracted spearmint oil. The large component peak which eluted from 29 to 31 minutes contains the bulk of the volatiles forming the spearmint flavor and was found to occur in the conventional steam distilled oil (5A) and the inventive $CO_2$ extracted oil (5B and 5C). In the time immediately preceding this large common peak, additional peaks were found in the residue of the inventive $CO_2$ extracted oil (5B) and the waxy fraction of the $CO_2$ extracted oil (5D). These additional peaks correlate with the complex mixture of compounds having a molecular weight range of 200 to 800 noted in the mass spectral analysis of the $CO_2$ extracted oil.

Gas Chromatography - Mass Spectrometry (GCMS)

GC separates constituents of a given unknown sample on a chromatography column. These separate constituents may then be further analyzed for identification and/or categorization. The semi-volatile components of the $CO_2$ extracted oil were analyzed by GC/MS using a double focusing mass spectrometer with a data processing system interfaced with a gas chromotograph. Comparative GC analyses of the $CO_2$ extracted spearmint oil and the steam distilled spearmint oil are set forth in Table III. The $CO_2$ extracted oil contains slightly more L-carvone and less mono-terpenes (pinenes, myrcene, terpinene, L-limonene) and 1,8-cineole. Iso-valeraldehyde and dimethyl sulfide are absent in the $CO_2$ extracted oil which suggests that they may be heat-generated. The $CO_2$ extracted oil also contains several unknown constituents which exhibited high retention times.

TABLE III

| (SPEARMINT OIL) | | |
|---|---|---|
| | % Peak Area | |
| Constituent | CO$_2$ Extracted | Steam Distilled |
| dimethyl sulfide | - | 0 |
| isobutyraldehyde | 0.01 | 0 |
| isovaleraldehyde | - | 0 |
| alpha-pinene | 0.37 | 0.73 |
| beta-pinene | 0.41 | 0.69 |
| sabinene | 0.32 | 0.47 |
| myrcene | 0.68 | 0.89 |
| alpha-terpinene | 0.03 | 0.02 |
| 1-limonene | 15.82 | 17.69 |
| 1,8-cineole | 0.92 | 1.39 |
| cis-ocimene | 0.02 | 0.02 |
| gamma-terpinene | 0.02 | 0.05 |
| para-cymene | 0.01 | 0.01 |
| terpinolene | 0.01 | 0.02 |
| 3-octyl acetate | 0.07 | 0.10 |
| 3-octanol | 1.89 | 2.01 |
| 1-octen-3-ol | 0.03 | 0.04 |
| trans-sabinene hydrate | 0.46 | 0.46 |
| 1-menthone | 0.93 | 1.07 |
| beta-bourbonene | 0.92 | 1.07 |
| linalool | 0.05 | 0.05 |
| beta-caryophyllene | 0.52 | 0.59 |
| terpinen-4-ol | 0.19 | 0.20 |
| dihydrocarvone | 0.83 | 0.83 |
| dihydrocarvyl acetate | 0.05 | 0.13 |
| trans-beta-farnesene | 0.44 | 0.24 |
| alpha-terpineol | 0.24 | 0.45 |
| germacrene-D | 0.36 | 0.41 |
| 1-carvone | 69.01 | 67.22 |
| carvyl acetate | 0.03 | 0.04 |
| trans-carveol | 0.19 | 0.19 |
| cis-carveol | 0.32 | 0.31 |
| cis-jasmone | 0.24 | 0.19 |
| viridiflorol | 0.09 | 0 |
| Unkn. 1 (43.50 min.)* | 0.13 | - |
| " 2 (49.26 min.) | 0.19 | - |
| " 3 (52.74 min.) | 0.26 | - |
| " 4 (57.09 min.) | 0.24 | - |
| " 5 (62.97 min.) | 0.08 | - |
| " 6 (63.49 min.) | 0.19 | - |
| " 7 (67.97 min.) | 0.39 | - |

* Retention time of unknown peak in minutes.
1-carvone is at 23.08 minutes.

EXAMPLE 6

This example demonstrates the use of various mint-type flavoring oils in chewing gum compositions having the following general formulation

| Ingredient | % By Weight |
|---|---|
| gum base | 23.0 |
| filler/sweetener | 60.5 |
| glycerin | 15.0 |
| flavoring oil | 1.0 |
| lecithin | 0.5 |

Spearmint oil was incorporated into the gum formulation in an amount of 1.0% by weight. It was the only flavoring agent used. Inventive I contained $CO_2$ extracted oil from Example 1 and Comparative A contained conventional steam-distilled spearmint oil. The gum was prepared by traditional methods, then rolled and scored to prepare individual pieces. The gum pieces were subjected to a flavor chew out study to determine its flavor characteristics. The pieces were evaluated fresh and after accelerated storage of 37°C and 80% relative humidity for four weeks.

The taste of the $CO_2$ extracted spearmint oil flavored gum was found to be more leaf like and similar to that of the mint plant itself. Less bitterness was noted. Fresh spearmint taste was still quite perceptible after 25 minutes. In fact, enhanced flavor release and duration was noted by 4 out of 7 experts. Enhancement of the sweerness of the gum was also noted.

The steam-distilled spearmint oil flavored gum was similar to conventional spearmint flavored gum. More bitterness was noted as compared to the $CO_2$ extracted spearmint oil flavored gum. The taste remained somewhat perceptible after 15 minutes but was virtually non-existent after 25 minutes.

## EXAMPLE 7

This example demonstrates a "hard" tablet-type confectionary product incorporating the novel spearmint oil.

| Ingredient | % By Weight |
|---|---|
| crystalline sorbitol | 98.0 |
| dibasic calcium phosphate | 0.5 |
| magnesium stearate | 1.3 |
| $CO_2$ extracted spearmint oil | 0.2 |

The base material was mixed and heated to about 60 to about 80°C. The $CO_2$ extracted spearmint oil was incorporated thereinto. Mixing was continued for several minutes to provide a homogeneous mass whereupon the mixture was extruded and pressed into that level edged disc-shaped tablets. The tablets had a strong spearmint odor and flavor with a firm texture.

The invention as thus hereinbefore described may obviously be varied in many ways. Such variations are not to be regarded as a departure from the spirit and scope of the invention and all such modifications are intended to be included within the scope of the following claims

**Claims**

1. A mint-type flavouring oil, which comprises: a liquid flavour oil wherein the flavour oil has a volatile component and a non-volatile component having an alcohol non-soluble semi-solid waxy fraction, and wherein the non-volatile component is a complex mixture of compounds having a molecular weight range of 200 to 800.

2. A flavoured chewing gum composition which comprises a chewing gum base and a mint-type

13 .

flavouring oil incorporated therein in an amount of 0.01% to 5.0% by weight of the final composition, wherein the mint-type flavouring oil has a volatile component and a non-volatile component having an alcohol non-soluble semi-solid waxy fraction, and wherein the non-volatile component is a complex mixture of compounds having a molecular weight range of 200 to 800.

3. A process for the preparation of a flavoured chewing gum composition according to claim 2, which process comprises admixing a chewing gum base with the mint-type flavouring oil, mixing until a uniform mixture of gum base and flavouring oil is obtained, and forming the mixture into suitable chewing gum composition shapes.

4. A flavoured confectionery composition which comprises sweetener in an amount of 0.005% to 99% by weight of the final composition and a mint-type flavouring oil incorporated therein in an amount of 0.01% to 5.0% by weight of the final composition, wherein the mint-type flavouring oil has a volatile component and a non-volatile component having an alcohol non-soluble semi-solid waxy fraction, and wherein the non-volatile component is a complex mixture of compounds having a molecular weight range of 200 to 800.

5. A process for the preparation of a flavoured confectionery composition according to claim 4, which comprises: making a confectionery base, by heating and mixing together at elevated temperatures the base support material; cooling and kneading the mixture: admixing the mint-type flavouring oil into the base support; and forming the resulting mixture into suitable confectionery shapes.

6. Food, toothpaste, jellies, extracts, pharmaceuticals, beverages, tobacco, or proprietary products, which contain an effective amount of a mint-type flavouring oil according to claim 1.

7. A method of flavouring food, toothpaste, jellies, extracts, pharmaceuticals, beverages, tobacco, or proprietary products, which method comprises adding thereto an effective amount of a mint-type flavouring oil according to claim 1.

8. A process for the extraction of mint-type flavour oils from mint plant material, which comprises:
  (a) charging the mint plant material into an extraction vessel;
  (b) pumping supercritical carbon dioxide through the extraction vessel; and
  (c) collecting the mint extract.

9. A process according to claim 8, wherein the mint plant material comprises the leaves, flowering tops, or mixtures thereof, of spearmint or peppermint plants.

10. A process according to claim 8 or 9, wherein the mint plant material is fresh.

11. A process according to claim 8 or 9, wherein the mint plant material is dried.

12. A process according to any one of claims 8 to 11, wherein the temperature and pressure of the supercritical carbon dioxide is above approximately 30°C and above approximately 1000 psia.

13. A process according to claim 12, wherein the temperature and the pressure of the supercritical carbon dioxide is from 30°C to 40°C and from 1070 psia to 3000 psia.

14. A process according to any one of claims 8 to 13, wherein the supercritical carbon dioxide is pumped through the extraction vessel in the down-flow mode.

15. A process according to any one of claims 8 to 13, wherein the supercritical carbon dioxide is pumped through the extraction vessel in the up-flow mode.

16. A process according to any one of claims 8 to 15, which further comprises cycling the supercritical carbon dioxide in a semi-batch manner for sufficient time to extract the flavour oil from the plant material.

17. A process according to any one of claims 8 to 15, which further comprises cycling the supercritical carbon dioxide in a continuous flow manner for sufficient time to extract the flavour oil from the plant material.

18. A process according to any one of claims 8 to 17, wherein the collection of the mint extract is performed in a product trap.

19. A process according to claim 18, wherein the product trap is maintained at -10°C to 20°C.

Claims for the following Contracting State: ES

1. A process for the preparation of a flavoured chewing gum composition which comprising a chewing gum base and a mint-type flavouring oil incorporated therein in an amount of 0.01% to 5.0% by weight of the final composition, wherein the mint-type flavouring oil has a volatile component and a non-volatile component having an alcohol non-soluble semi-solid waxy fraction, and wherein the non-volatile component is a complex mixture of compounds having a molecular weight range of 200 to 800, which process comprises admixing the chewing gum base with the mint-type flavouring oil, mixing until a uniform mixture of gum base and flavouring oil is obtained, and forming the mixture into suitable chewing gum composition shapes.

2. A process for the preparation of a flavoured confectionery composition which comprising sweetener in an amount of 0.005% to 99% by weight of the final composition and a mint-type flavouring oil incorporated therein in an amount of 0.01% to 5.0% by weight of the final composition, wherein the mint-type flavouring oil has a volatile component and a non-volatile component having an alcohol non-soluble semi-solid waxy fraction, and wherein the non-volatile component is a complex mixture of compounds having a molecule weight range of 200 to 800, which process comprises: making a confectionery base, by heating and mixing together at elevated temperatures the base support material; cooling and kneading the mixture; admixing the mint-type flavouring oil into the base support; and forming the resulting mixture into suitable confectionery shapes.

3. A method of flavouring food, toothpaste, jellies, extracts, pharmaceuticals, beverages, tobacco, or proprietary products, which method comprises adding thereto an effective amount of a mint-type flavouring oil which has a volatile component and a non-volatile component having an alcohol non-soluble semi-solid waxy fraction, and wherein the non-volatile component is a complex mixture of compounds having a molecular weight range of 200 to 800.

4. A process for the extraction of mint-type flavour oils from mint plant material, which comprises:

(a) charging the mint plant material into an extraction vessel;

(b) pumping supercritical carbon dioxide through the extraction vessel; and

(c) collecting the mint extract.

5. A process according to claim 4, wherein the mint plant material comprises the leaves, flowering tops, or mixtures thereof, of spearmint or peppermint plants.

6. A process according to claim 4 or 5, wherein the mint plant material is fresh.

7. A process according to claim 4 or 5, wherein the mint plant material is dried.

8. A process according to any one of claims 4 to 7, wherein the temperature and pressure of the supercritical carbon dioxide is above approximately 30°C and above approximately 1000 psia.

9. A process according to claim 8, wherein the temperature and the pressure of the supercritical carbon dioxide is from 30°C to 40°C and from 1070 psia to 3000 psia.

10. A process according to any one of claims 4 to 9, wherein the supercritical carbon dioxide is pumped through the extraction vessel in the down-flow mode.

11. A process according to any one of claims 4 to 9, wherein the supercritical carbon dioxide is pumped through the extraction vessel in the up-flow mode.

12. The process according to any one of claims 4 to 11, which further comprises cycling the supercritical carbon dioxide in a semi-batch manner for sufficient time to extract the flavour oil from the plant material.

13. A process according to any one of claims 4 to 11, which further comprises cycling the supercritical carbon dioxide in a continuous flow manner for sufficient time to extract the flavour oil from the plant material.

14. A process according to any one of claims 4 to 13, wherein the collection of the mint extract is performed in a product trap.

15. A process according to claim 14, wherein the product trap is maintained at -10°C to 20°C.

16. A process according to any one of claims 4 to 15 for the preparation of a mint-type flavouring oil which has a volatile component and a non-volatile component having an alcohol non-soluble semi-solid waxy fraction, and wherein the non-volatile component is a complex mixture of compounds having a molecular weight range of 200 to 800.

15

**FIG-1** FLOW DIAGRAM FOR SUPERCRITICAL $CO_2$ EXTRACTION OF MINT PLANT MATERIAL

# FIG-2  OPERATING CONDITIONS FOR EXTRACTION OF SPEARMINT OIL : RUN A

+ CO₂/LEAF     △ TEMP.     ● PRESSURE

# FIG-3 OPERATING CONDITIONS FOR EXTRACTION OF SPEARMINT OIL: RUN B

+ $CO_2$/LEAF    △ TEMP.    ● PRESSURE

FIG-4 MASS SPECTRUM OF CO₂ EXTRACTED SPEARMINT OIL

EP 0 349 186 A2

FIG-5 COMPARATIVE GPC-SPEARMINT OIL

(5A) CONVENTIONAL STEAM DISTILLED OIL

G:GPC176 SCALE 1000 OFFSET 200

TIME 0.00    TIME 45.00

(5B) COMPOSITE INVENTIVE $CO_2$ EXTRACTED OIL

G:GPC172 SCALE 1000 OFFSET 300

TIME 0.00    TIME 45.00

(5C) VOLATILE FRACTION INVENTIVE $CO_2$ EXTRACTED OIL

G:GPC171 SCALE 1000 OFFSET 300

TIME 0.00    TIME 45.00

(5D) WAXY FRACTION INVENTIVE $CO_2$ EXTRACTED OIL

G:GPC166 SCALE 600 OFFSET 400

TIME 0.00    TIME 45.00

EP 0 349 186 A2